(19) **Europäisches Patentamt / European Patent Office / Office européen des brevets**

(11) **EP 4 779 734 A1**

(12) **EUROPEAN PATENT APPLICATION**
published in accordance with Art. 153(4) EPC

(43) Date of publication:
**22.07.2026 Bulletin 2026/30**

(21) Application number: **24901740.1**

(22) Date of filing: **27.12.2024**

(51) International Patent Classification (IPC):
**H01M 10/052** (2010.01)    **H01M 10/056** (2010.01)
**H01M 4/13** (2010.01)

(52) Cooperative Patent Classification (CPC):
**H01M 4/13; H01M 10/0525; H01M 10/0566;**
H01M 4/5825; H01M 4/587; H01M 10/0569;
H01M 2004/021; H01M 2004/028;
H01M 2300/0028; Y02E 60/10

(86) International application number:
**PCT/CN2024/143144**

(87) International publication number:
**WO 2026/113101 (04.06.2026 Gazette 2026/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.11.2024 CN 202411748649**

(71) Applicant: **Eve Power Co., Ltd.**
**Jingmen, Hubei 448000 (CN)**

(72) Inventors:
• **WEI, Haitao**
  **Jingmen, Hubei 448000 (CN)**

• **HE, Wei**
  **Jingmen, Hubei 448000 (CN)**
• **YUAN, Dingding**
  **Jingmen, Hubei 448000 (CN)**
• **HUANG, Xin**
  **Jingmen, Hubei 448000 (CN)**
• **CHEN, Xue**
  **Jingmen, Hubei 448000 (CN)**
• **CHE, Liyuan**
  **Jingmen, Hubei 448000 (CN)**
• **ZHAO, Hongwan**
  **Jingmen, Hubei 448000 (CN)**

(74) Representative: **Berggren Oy**
**P.O. Box 16**
**Fabianinkatu 21**
**00101 Helsinki (FI)**

(54) **BATTERY, BATTERY PACK AND ELECTRIC APPARATUS**

(57)    The present disclosure provides a battery, a battery pack, and an electric device belonging to the field of battery technologies. The battery includes a positive electrode plate, a negative electrode plate, and an electrolyte; where the battery satisfies: $1.5 \leq \frac{V \times PD}{C} \leq 3.6$, and where V represents a viscosity of the electrolyte in mPa·s, PD represents a compaction density of the positive electrode sheet in g/cm³, and C represents an injection coefficient of the electrolyte in g/Ah.

EP 4 779 734 A1

## Description

This application claims priority to Chinese Patent Applications No. 202411748649.1, filed with the Chinese Patent Office on November 29, 2024, content of which is incorporated herein by reference in its entirety.

## TECHNICAL FIELD

The present disclosure relates to the field of battery technologies, and more particular to a battery, a battery pack, and an electric device.

## BACKGROUND

With the rapid development of new energy vehicles, how to improve the range of the new energy vehicles and reduce the charging time of the new energy vehicles has become a direction of research and development of the new energy vehicles. In order to increase the range of the new energy vehicles, it is necessary to increase the energy density of power batteries.

## SUMMARY

In the related art, increasing areal density and compaction density of an electrode sheet in a battery is an important means for increasing the energy density of a lithium battery. However, the increase in the areal density and the compaction density of the electrode sheet in the battery may easily lead to a decrease in the wettability of the electrolyte to the electrode sheet, thereby affecting the kinetic performance of the battery and adversely affecting the fast charging performance and the cycle life of the battery.

The present disclosure provides a battery, including: a positive electrode sheet, a negative electrode sheet, and an electrolyte; the battery satisfies $1.5 \leqslant \frac{V \times PD}{C} \leqslant 3.6$, where V represents a viscosity of the electrolyte in mPa·s, PD represents a compaction density of the positive electrode sheet in g/cm$^3$, and C represents an injection coefficient of the electrolyte in g/Ah.

The present disclosure further provides a battery pack, including: the battery described above.

The present disclosure further provides an electric device, including: the battery described above, and/or the battery pack described above.

Beneficial Effects

According to the battery provided in the embodiments of the present disclosure, the viscosity of the electrolyte, the injection coefficient of the electrolyte, and the compaction density of the positive electrode sheet in the battery satisfy

$1.5 \leqslant \frac{V \times PD}{C} \leqslant 3.6$, so that it is possible to ensure that the electrolyte has good wettability to the positive electrode sheet when the compaction density and the area density of the positive electrode sheet in the battery are higher. Consequently, the battery has high energy density while reducing negative effects caused by the increasing of the compaction density and the area density. This increases the charge transfer efficiency, optimizes the cycle performance of the battery, improves the power density of the battery, and boosts the comprehensive performance of the battery.

According to the battery pack provided in the embodiments of the present disclosure, by including the battery described above in the battery pack, the battery pack can have high energy density while reducing negative effects caused by the increasing of the compaction density and the area density. This increases the charge transfer efficiency, optimizes the cycle performance of the battery, improves the power density of the battery, and boosts the comprehensive performance of the battery.

According to the electric device provided in the embodiments of the present disclosure, by including the battery described above and/or the battery pack described above in the electric device, it is possible to ensure good stability and performance of the electric device.

## DETAILED DESCRIPTION

In description of the present disclosure, it should be noted that the terms "interconnection", "connection" and "fixing" should be understood in a broad sense, unless otherwise clearly specified and defined. For example, "fixing" can be a fixed connection, a detachable connection, or integrated connection. It can be a mechanical connection or an electrical connection. It can be directly connected or indirectly connected through an intermediary. It can also be the connection between two elements or the interaction between two elements. The specific meaning of the above terms in the present disclosure may be understood by those of ordinary skill in the art according to the specific circumstances.

In the present disclosure, unless otherwise expressly specified or limited, a first feature being "on" or "under" a second feature may include either direct contact between the first and second features, or indirect contact through additional features interposed therebetween. Furthermore, the first feature being "on", "above", and "over" the second feature includes the first feature being directly above and diagonally above the second feature and the first feature being positioned at a higher elevation than the second feature. The first feature being "under", "below", and "beneath" the second feature include the first feature being directly below and diagonally below the second feature and the first feature being positioned at a lower elevation than the second feature.

In the description of the present embodiments, orientations or position relationships indicated by the terms "upper", "lower", "left", "right", "front", and "back" are based on orientations or position relationships illustrated in the drawings. The terms are used to facilitate and simplify the description and operations of the present disclosure, rather than indicate or imply that the devices or elements referred to herein are required to have specific orientations or be constructed or operate in the specific orientations. Accordingly, the terms should not be construed as limiting the present disclosure. Furthermore, the terms "first" and "second" are used to distinguish between descriptions and have no particular meaning.

In a first aspect, an embodiment of the present disclosure provides a battery, including: a positive electrode sheet, a negative electrode sheet, and an electrolyte. The battery satisfies the following formula (1):

$$1.5 \leqslant \frac{V \times PD}{C} \leqslant 3.6 \qquad (1);$$

where V represents viscosity of the electrolyte in mPa·s; PD represents compaction density of the positive electrode sheet in $g/cm^3$; and C represents injection coefficient of the electrolyte in g/Ah.

It should be noted that the viscosity of the electrolyte refers to a physical quantity that represents the internal friction resistance or flow difficulty exhibited when the electrolyte flows, which is one of the important indicators for measuring the flow performance of the electrolyte. The viscosity of the electrolyte is affected by various factors such as the type, concentration, nature of the solvent, and temperature of ions in the electrolyte. The higher the viscosity of the electrolyte, the slower the wetting speed of the electrode sheet, and the more difficult the diffusion of the electrolyte. The lower the viscosity of the electrolyte, the faster the wetting speed of the electrode sheet, and the easier the diffusion of the electrolyte. The viscosity of the electrolyte in the embodiments of the present disclosure refers to the viscosity of the electrolyte at room temperature (i.e., 25 °C).

The injection coefficient of the electrolyte refers to liquid injection amount of the electrolyte determined according to the cell capacity during battery manufacturing. For example, the cell capacity is 100Ah, and if the liquid injection coefficient is 3.0, 300g of the electrolyte should be injected, where the injection coefficient of the electrolyte is in units of g/Ah.

The compaction density of the positive electrode sheet refers to the degree to which the positive electrode sheet is compacted closely during positive electrode sheet manufacturing. Generally, the compaction density is increased, and the capacity and the energy density of the battery are increased. The compaction density of the positive electrode sheet in the embodiments of the present disclosure refers to the compaction density of the battery in a fully discharged state. Here, the fully discharged state refers to a state in which the battery is discharged to a cutoff voltage. The cutoff voltage is related to the selection of the positive electrode active material in the positive electrode sheet and the ambient temperature. For example, for a battery in which the positive electrode active material is lithium iron phosphate and lithium manganese iron phosphate, the fully discharged state refers to a state in which the battery is discharged to 2.5 V at room temperature (i.e., 25 °C), and the fully discharged state refers to a state in which the battery is discharged to 2 V at 0 °C. The compaction density of the positive electrode sheet can be calculated by measuring the areal density and thickness of the electrode sheet.

In the related art, in order to increase the energy density of the battery, the compaction density of the positive electrode sheet may be generally increased. After the compaction density of the positive electrode sheet is increased, on the one hand, the porosity of the positive electrode sheet is reduced, so that it is difficult for the electrolyte to penetrate into the interior of the positive electrode sheet, and the wetting effect is deteriorated; and on the other hand, in the process of increasing the compaction density, the pore channels between the particles in the positive electrode sheet are deformed due to the extrusion, thereby increasing the tortuosity of the pore channels and further increasing the difficulty of diffusion of the electrolyte in the positive electrode sheet. Therefore, an increase in the compaction density of the positive electrode sheet tends to cause deterioration in the wetting performance of the electrolyte to the positive electrode sheet.

The inventors have found through extensive research that it is possible to ensure that the wetting performance of the electrolyte to the positive electrode sheet is maintained within a reasonable range by reasonably controlling the viscosity V of the electrolyte, the injection coefficient C, and the compaction density PD to satisfy the above-mentioned first formula, thereby reducing the negative effect of increasing the compaction density on the battery performance.

In some embodiments, the battery satisfies the following formula (2):

$$2.5 \leqslant \frac{V \times PD}{C} \leqslant 3.5 \qquad (2).$$

By making the viscosity V of the electrolyte, the compaction density PD of the positive electrode sheet, and the injection coefficient C of the electrolyte satisfy the second formula, it is possible to ensure the wetting performance of the electrolyte to the positive electrode sheet, so that the battery can increase the energy density by increasing the compaction density while ensuring the charge transfer efficiency in the battery, and the cycle performance is the power density.

In some embodiments, the viscosity V of the electrolyte and the compaction density PD of the positive electrode sheet satisfy the following formula (3):

$$V = aPD + b \qquad (3);$$

where, $-5.0 \leq a \leq -4.0$, and $10 \leq b \leq 20$.

That is, the viscosity V of the electrolyte is inversely proportional to the compaction density PD of the positive electrode sheet. As described above, when the compaction density of the positive electrode sheet is increased, the porosity of the positive electrode sheet is easily reduced, that is, the pore channel is deformed. By reducing the viscosity of the electrolyte, the viscosity of the electrolyte can be made better, and penetration into the pores of the positive electrode sheet can be made easier, so that the active substance in the positive electrode sheet can more fully participate in the electrochemical reaction.

According to the embodiments of the present disclosure, the viscosity V of the electrolyte and the compaction density PD of the positive electrode sheet satisfy the above-mentioned third formula, so that the wetting performance of the electrolyte to the positive electrode sheet can be ensured, the ion distribution in the electrolyte can be made more uniform, the ion conduction efficiency can be ensured, the electrolyte can be kept stable, and the cycle performance of the battery can be improved.

In some embodiments, $-4.7 \leq a \leq -4.3$, and $13 \leq b \leq 16$.

The inventors have found through extensive research that, when parameters a and b in the above third formula are controlled within those ranges, the wetting performance of the electrolyte to the positive electrode sheet can be ensured, and the negative effect caused by the too low viscosity of the electrolyte can also be reduced.

In some embodiments, the viscosity V of the electrolyte and the compaction density PD of the positive electrode sheet satisfy the following formula (4):

$$V = -4.6PD + 14.903 \qquad (4);$$

where, the correlation coefficient of the above fourth formula is $R^2 = 0.985$.

Illustratively, when the compaction density PD of the positive electrode sheet is 2.55 g/cm$^3$, the viscosity of the electrolyte may be 3.19 mPa·s; when the compaction density PD of the positive electrode sheet is 2.50 g/cm$^3$, the viscosity of the electrolyte may be 3.37 mPa·s; and when the compaction density PD of the positive electrode sheet is 2.45 g/cm$^3$, the viscosity of the electrolyte may be 3.65 mPa·s.

In some embodiments, the viscosity V of the electrolyte satisfies: 2.5 mPa·s$\leq$V$\leq$4.0 mPa·s.

By controlling the viscosity of the electrolyte in the above-mentioned range, the electrolyte provides moderate ionic resistance, enabling relative fast charge transport through the electrolyte. This facilitates the improvement of the charging and discharging efficiency of the battery, and enables the battery to respond to the change of the load more quickly. The internal friction resistance of the electrolyte is also smaller, and the internal resistance of the battery can be reduced. The viscosity range also contributes to maintaining the stability of the electrolyte during the battery cycling, thereby reducing decomposition and side reactions of the electrolyte. In addition, the viscosity of the electrolyte is within the above-mentioned range, so that it can be ensured that the electrolyte has a good thermal stability, thereby contributing to reducing the safety risk of the battery at a high temperature, and improving the safety performance of the battery.

In some embodiments, the injection coefficient C of the electrolyte satisfies: 2.5 g/Ah$\leq$C$\leq$4.5 g/Ah.

When the injection coefficient of the electrolyte is within the above range, the wetting performance of the electrolyte can be ensured, the electrochemical reaction inside the battery can be promoted, the charging and discharging efficiency and the energy density of the battery can be improved, and the stability of the battery during the cycling can be maintained, thereby reducing the occurrence of the decomposition and side reactions of the electrolyte. In addition, by controlling the injection coefficient of the electrolyte within the above range, the circle performance of the battery can be ensured.

In some embodiments, the compaction density PD of the positive electrode sheet satisfies: 2.2 g/cm$^3$≤PD≤2.8 g/cm$^3$.

By controlling the compaction density of the positive electrode sheet within the above range, the active substance in the positive electrode sheet can be fully utilized, and the energy density and the capacity of the battery can be improved. The higher compaction density makes the contact between the active substances tighter, thereby facilitating the intercalation and deintercalation of lithium ions and further increasing the specific capacity of the battery.

In some embodiments, the viscosity V of the electrolyte satisfies: 3.2 mPa·s≤V≤3.6 mPa·s.

By controlling the viscosity of the electrolyte within the range, the performance of the battery can be improved, which is not repeatedly described again herein.

In some embodiments, the injection coefficient C of the electrolyte satisfies: 2.8 g/Ah≤C≤3.5 g/Ah.

By controlling the injection coefficient of the electrolyte within the range, the performance of the battery can be improved and the circle performance of the battery can be ensured, which is not repeatedly described again herein.

In some embodiments, the compaction density PD of the positive electrode sheet satisfies: 2.3 g/cm$^3$≤PD≤2.6 g/cm$^3$.

By controlling the compaction density of the positive electrode sheet within the range, the performance of the battery can be improved, which is not repeatedly described again herein.

In some embodiments, the electrolyte includes a lithium salt and a solvent, where the solvent includes at least one of: Dimethyl carbonate (DMC), Ethylene carbonate (EC), Propylene carbonate (PC), Ethyl methyl carbonate (EMC), Ethyl acetate (EA), and Fluoroethylene carbonate (FB).

The lithium salt in the electrolyte is capable of providing lithium ions to ensure the charge conduction efficiency of the electrolyte, while the solvent is capable of dissolving the lithium salt to ensuring that the electrolyte has appropriate viscosity, stability, and other properties.

The solvent in the electrolyte in the present embodiment includes at least one of the dimethyl carbonate, the ethylene carbonate, the propylene carbonate, the ethyl methyl carbonate, the ethyl acetate, and the fluoroethylene carbonate. These solvents all have high ionic conductivity of facilitating the dissolution of the lithium salt and the conduction of the ions, have good electrochemical stability of resisting the decomposition or side reactions, and have good compatibility with the electrode material of facilitating the formation of a stable solid electrolyte interphase (SEI) film on the electrode surface. By adjusting the composition and ratio of the solvents, the electrolyte can be made to have a suitable viscosity.

In some embodiments, the solvent includes dimethyl carbonate (DMC), with a mass percentage of the dimethyl carbonate in the solvent being less than or equal to 50%.

The viscosity of the dimethyl carbonate is relatively small, and the viscosity of the solvent can be adjusted by including the dimethyl carbonate in the solvent, thereby satisfying the viscosity range required in the present embodiment. It should be understood that the higher the addition ratio of dimethyl carbonate, the lower the viscosity of the electrolyte, the better the wetting effect on the positive electrode sheet and the negative electrode sheet in the battery, and the more suitable for the high compaction density battery system.

In addition, although the dimethyl carbonate can reduce the viscosity of the electrolyte, in order to ensure that the electrolyte has better electrochemical stability and that the electrolyte has better conduction efficiency, the mass percentage of the dimethyl carbonate in the solvent is controlled to be 50% or less.

In some embodiments, the mass percentage of the dimethyl carbonate in the solvent is less than or equal to 30%.

In some embodiments, the positive electrode sheet has a single-sided areal density of 150 g/m$^2$ to 300 g/m$^2$.

By controlling the single-sided areal density of the positive electrode sheet within the above-mentioned range, the mass of the active substance in the positive electrode sheet can be improved, thereby contributing to the improvement of the energy density of the battery. This enables the battery to store more energy at the same volume or weight. In addition, the single-sided areal density of the positive electrode sheet is further related to the power density of the battery. In the above range, the migration path of the lithium ions can be shortened, and the internal resistance of the battery can be reduced, thereby improving the power transmission capability of the battery. The relatively high single-sided areal density also enables the structure of the positive electrode sheet to be more compact and reduces the structural failure due to volume changes during charging and discharging of the battery.

In some embodiments, the positive electrode active material in the positive electrode sheet includes one of lithium iron phosphate and lithium manganese iron phosphate.

Both lithium iron phosphate (LFP) and lithium manganese iron phosphate (LMFP) are olivine-type positive electrode active materials with stable crystal structures, which contributes to maintaining the integrity of the materials during charging and discharging, and improving the cycle stability and service life of the battery. Moreover, both the lithium iron phosphate and the lithium manganese iron phosphate have good high-temperature stability and are not prone to problems such as thermal runaway or ignition.

Furthermore, the lithium iron phosphate and the lithium manganese iron phosphate also differ in their properties. For example, the lithium manganese iron phosphate has a higher voltage plateau and higher theoretical energy density relative to the lithium iron phosphate. In order to improve the energy density of the battery and ensure the wetting performance of the electrolyte, different compaction densities of the positive electrode sheet may be provided according to the selection of the positive electrode active material. For example, when the positive electrode active material is the lithium iron phosphate, the compaction density of the positive electrode sheet may be 2.3 $g/cm^3$ to 2.4 $g/cm^3$; and when the positive electrode active material is the lithium manganese iron phosphate, the compaction density of the positive electrode sheet may be 2.4 $g/cm^3$ to 2.55 $g/cm^3$.

In some embodiments, a negative electrode active material in the negative electrode sheet includes graphite. The graphite has a higher theoretical lithium intercalation capacity, which contributes to increasing the energy density of the battery. Moreover, the graphite has a low lithium intercalation potential, which contributes to reducing the polarization phenomenon of the battery during the charging and discharging and improving the operation efficiency of the battery. The graphite further has good cycle stability, stable structure, and higher thermal stability.

In some embodiments, the negative electrode sheet has a single-sided areal density of 80 $g/m^2$ to 120 $g/m^2$.

When the single-sided areal density of the negative electrode sheet is in the above range, it facilitates the balance between the energy density and the power density of the battery, the structure of the negative electrode sheet is more compact, the distribution of the active substance is more uniform, and the structure damage phenomenon caused by volume change in the charging and discharging is reduced, thereby improving the cycle stability of the battery. In addition, in the above range, the energy density and the safety of the battery can be balanced, the internal resistance and the fever amount of the battery can be reduced, and the safety of the battery can be ensured.

In some embodiments, the negative electrode sheet has a compaction density of 1.45 $g/cm^3$ to 1.70 $g/cm^3$.

The compaction density is one of the important factors affecting the energy density of the battery. When the compaction density of the negative electrode sheet is within the above-mentioned range, the energy density of the battery can be improved, and the stability and the integrity of the structure of the negative electrode sheet can be maintained, thereby facilitating rapid intercalation and de-intercalation of lithium ions, reducing the internal resistance of the battery, and improving the power output capability and the response speed of the battery.

In some embodiments, a ratio of the negative electrode capacity to the positive electrode capacity (NP ratio) of the battery is in a range of 1.05 to 1.25.

The increase in the negative electrode capacity relative to the positive electrode capacity makes it possible for the battery to utilize the active substance more efficiently during the charging and discharging, thereby increasing the energy density of the battery. A higher NP ratio contributes to reducing the internal resistance of the battery and increasing the output capability and response speed of the battery, so that the battery can perform better in an application scenario requiring high power output.

In some embodiments, a ratio of the negative electrode capacity to the positive electrode capacity of the battery is in a range of 1.10 to 1.15. When the NP ratio is set in the range, the energy density, the output capability, and the response speed of the battery can be improved.

In some embodiments, the battery has an energy density of 150 Wh/kg to 250 Wh/kg.

The battery with a high energy density can store more energy at the same weight, thereby prolonging the driving range and duration of devices such as new energy vehicles. Moreover, the battery with a high energy density can support higher power output, so that the device performs better in an application scenario requiring high power output. At the same time, the battery with the high energy density typically also has faster charging speeds, contributing to reducing the charging time of the device.

According to the embodiments of the present disclosure, the viscosity V of the electrolyte, the compaction density PD of the positive electrode sheet, and the injection coefficient C of the electrolyte satisfy the first formula, so that the battery can maintain the wetting performance of the electrolyte while having a high energy density, thereby improving the overall performance of the battery.

In a second aspect, embodiments of the present disclosure provide a battery pack including the battery as described above. The battery pack provided in the embodiments of the present disclosure has all the beneficial effects of the battery described above, which is not repeatedly described again herein.

In a third aspect, embodiments of the present disclosure provide an electric device including the battery as described above, and/or the battery pack as described above. The electric device provided in the embodiments of the present disclosure has all the beneficial effects of the battery described above, which is not repeatedly described again herein.

The embodiments of the present disclosure are set forth below in connection with specific embodiments. It should be understood that these embodiments are merely illustrative of the present disclosure and are not intended to limit the scope of the present disclosure. Experimental methods not specified in the following embodiments generally follow a condition suggested by a manufacturer.

First embodiment

The lithium iron phosphate is used as the positive electrode active material to prepare a positive electrode slurry, and the positive electrode slurry is coated on a copper foil having a thickness of 5 μm to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 μm to obtain a negative electrode sheet, where the negative electrode sheet has a single-sided areal density of 99 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 μm and coatings at both sides of the base film are composite-coated separators having a thickness of 2 μm.

The stacked core is placed into a battery case, and then moisture is removed from the battery by vacuum baking.

Lithium difluorosulfonimide (LiFSI) and lithium hexafluorophosphate (LiPF$_6$) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 35 parts by weight of methyl ethyl carbonate, and 30 parts by weight of dimethyl carbonate, and the viscosity of the electrolyte is 3.24.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.10 mPa·s.

The battery with the electrolyte is first charged for formation.

An insulating film is attached to the formed battery, so that the positive electrode and the negative electrode of the battery are not directly contacted with each other.

Second embodiment

The lithium manganese iron phosphate is used as the positive electrode active material to prepare a positive electrode slurry, and the positive electrode slurry is coated on a copper foil having a thickness of 5 μm to obtain a positive electrode sheet, where the positive electrode sheet has a single-sided areal density of 210 g/m$^2$ and a compaction density of 2.32 g/cm$^3$.

The graphite is used as the negative electrode active material to prepare a negative electrode slurry, and the negative electrode slurry is coated on an aluminum foil having a thickness of 12 μm to obtain a negative electrode sheet, where the negative electrode sheet has a single-sided areal density of 93 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 μm and coatings at both sides of the base film are composite-coated separators having a thickness of 2 μm.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 25 parts by weight of methyl ethyl carbonate, and 40 parts by weight of dimethyl carbonate, and the viscosity of the electrolyte is 3.19 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.25.

The battery with the electrolyte is first charged for formation.

An insulating film is attached to the formed battery, so that the positive electrode and the negative electrode of the battery are not directly contacted with each other.

Third embodiment

The lithium iron phosphate is used as the positive electrode active material to prepare a positive electrode slurry, and the positive electrode slurry is coated on a copper foil having a thickness of 5 μm to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 $\mu$m to obtain a negative electrode sheet, where the negative electrode sheet has a single-sided areal density of 99 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 $\mu$m and coatings at both sides of the base film are composite-coated separators having a thickness of 2 $\mu$m.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 25 parts by weight of methyl ethyl carbonate, and 40 parts by weight of dimethyl carbonate, and the viscosity of the electrolyte is 3.19 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.10.

The battery with the electrolyte is first charged for formation.

An insulating film is attached to the formed battery, so that the positive electrode and the negative electrode of the battery are not directly contacted with each other.

Fourth embodiment

The lithium iron phosphate is used as the positive electrode active material to prepare a positive electrode slurry, and the positive electrode slurry is coated on a copper foil having a thickness of 5 $\mu$m to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 $\mu$m to obtain a negative electrode sheet, where the negative electrode sheet has a single-sided areal density of 99 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 $\mu$m and coatings at both sides of the base film are composite-coated separators having a thickness of 2 $\mu$m.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 45 parts by weight of methyl ethyl carbonate, and 20 parts by weight of dimethyl carbonate, and the viscosity of the electrolyte is 3.37 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.10.

The battery with the electrolyte is first charged for formation.

An insulating film is attached to the formed battery, so that the positive electrode and the negative electrode of the battery are not directly contacted with each other.

Fifth embodiment

The lithium iron phosphate is used as the positive electrode active material to prepare a positive electrode slurry, and the positive electrode slurry is coated on a copper foil having a thickness of 5 $\mu$m to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 $\mu$m to obtain a negative electrode sheet, where the negative electrode sheet has a single-sided areal density of 99 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 μm and coatings at both sides of the base film are composite-coated separators having a thickness of 2 μm.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 55 parts by weight of methyl ethyl carbonate, and 10 parts by weight of dimethyl carbonate, and the viscosity of the electrolyte is 3.49 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.10.

The battery with the electrolyte is first charged for formation.

An insulating film is attached to the formed battery, so that the positive electrode and the negative electrode of the battery are not directly contacted with each other.

Sixth embodiment

The lithium iron phosphate is used as the positive electrode active material to prepare a positive electrode slurry, and the positive electrode slurry is coated on a copper foil having a thickness of 5 μm to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 μm to obtain a negative electrode sheet, where the negative electrode sheet has a single-sided areal density of 99 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 μm and coatings at both sides of the base film are composite-coated separators having a thickness of 2 μm.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 65 parts by weight of methyl ethyl carbonate, and the viscosity of the electrolyte is 3.65 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.10.

The battery with the electrolyte is first charged for formation.

An insulating film is attached to the formed battery, so that the positive electrode and the negative electrode of the battery are not directly contacted with each other.

Seventh embodiment

The lithium iron phosphate is used as the positive electrode active material to prepare a positive electrode slurry, and the positive electrode slurry is coated on a copper foil having a thickness of 5 μm to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 μm to obtain a negative electrode sheet, where the negative electrode sheet has a single-sided areal density of 99 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 μm and coatings at both sides of the base film are composite-coated separators having a thickness of 2 μm.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 15 parts by weight of methyl ethyl carbonate, and 50 parts by weight of dimethyl carbonate, and the viscosity of the electrolyte is 2.85 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.10.

The battery with the electrolyte is first charged for formation.

An insulating film is attached to the formed battery, so that the positive electrode and the negative electrode of the battery are not directly contacted with each other.

Eighth embodiment

The lithium iron phosphate is used as the positive electrode active material to prepare a positive electrode slurry, and the positive electrode slurry is coated on a copper foil having a thickness of 5 μm to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 μm to obtain a negative electrode sheet, where the negative electrode sheet has a single-sided areal density of 99 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 μm and coatings at both sides of the base film are composite-coated separators having a thickness of 2 μm.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 50 parts by weight of methyl ethyl carbonate, and 50 parts by weight of dimethyl carbonate, and the viscosity of the electrolyte is 2.5 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.10.

The battery with the electrolyte is first charged for formation.

An insulating film is attached to the formed battery, so that the positive electrode and the negative electrode of the battery are not directly contacted with each other.

Ninth embodiment

The lithium iron phosphate is used as the positive electrode active material to prepare a positive electrode slurry, and the positive electrode slurry is coated on a copper foil having a thickness of 5 μm to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 μm to obtain a negative electrode sheet, where the negative electrode sheet has a single-sided areal density of 99 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 μm and coatings at both sides of the base film are composite-coated separators having a thickness of 2 μm.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 60 parts by weight of vinyl carbonate, and 40 parts by weight of propylene carbonate, and the viscosity of the electrolyte is 4.0 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.10.

The battery with the electrolyte is first charged for formation.

An insulating film is attached to the formed battery, so that the positive electrode and the negative electrode of the battery are not directly contacted with each other.

Tenth embodiment

The lithium manganese iron phosphate is used as the positive electrode active material to prepare a positive electrode slurry, and the positive electrode slurry is coated on a copper foil having a thickness of 5 $\mu$m to obtain a positive electrode sheet, where the positive electrode sheet has a single-sided areal density of 150 g/m$^2$ and a compaction density of 2.2 g/cm$^3$.

The graphite is used as the negative electrode active material to prepare a negative electrode slurry, and the negative electrode slurry is coated on an aluminum foil having a thickness of 12 $\mu$m to obtain a negative electrode sheet, where the negative electrode sheet has a single-sided areal density of 66 g/m$^2$ and a compaction density of 1.45 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 $\mu$m and coatings at both sides of the base film are composite-coated separators having a thickness of 2 $\mu$m.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 25 parts by weight of methyl ethyl carbonate, and 40 parts by weight of dimethyl carbonate, and the viscosity of the electrolyte is 3.19 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.25.

The battery with the electrolyte is first charged for formation.

An insulating film is attached to the formed battery, so that the positive electrode and the negative electrode of the battery are not directly contacted with each other.

Eleventh embodiment

The lithium manganese iron phosphate is used as the positive electrode active material to prepare a positive electrode slurry, and the positive electrode slurry is coated on a copper foil having a thickness of 5 $\mu$m to obtain a positive electrode sheet, where the positive electrode sheet has a single-sided areal density of 210 g/m$^2$ and a compaction density of 2.5 g/cm$^3$.

The graphite is used as the negative electrode active material to prepare a negative electrode slurry, and the negative electrode slurry is coated on an aluminum foil having a thickness of 12 $\mu$m to obtain a negative electrode sheet, where the negative electrode sheet has a single-sided areal density of 97 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 $\mu$m and coatings at both sides of the base film are composite-coated separators having a thickness of 2 $\mu$m.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 25 parts by weight of methyl ethyl carbonate, and 40 parts by weight of dimethyl carbonate, and the viscosity of the electrolyte is 3.19 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 2.5.

The battery with the electrolyte is first charged for formation.

An insulating film is attached to the formed battery, so that the positive electrode and the negative electrode of the battery are not directly contacted with each other.

Twelfth embodiment

The lithium manganese iron phosphate is used as the positive electrode active material to prepare a positive electrode slurry, and the positive electrode slurry is coated on a copper foil having a thickness of 5 $\mu$m to obtain a positive electrode sheet, where the positive electrode sheet has a single-sided areal density of 210 g/m$^2$ and a compaction density of 2.5 g/cm$^3$.

The graphite is used as the negative electrode active material to prepare a negative electrode slurry, and the negative electrode slurry is coated on an aluminum foil having a thickness of 12 $\mu$m to obtain a negative electrode sheet, where the negative electrode sheet has a single-sided areal density of 97g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 $\mu$m and coatings at both sides of the base film are composite-coated separators having a thickness of 2 $\mu$m.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 25 parts by weight of methyl ethyl carbonate, and 40 parts by weight of dimethyl carbonate, and the viscosity of the electrolyte is 3.19 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 4.5.

The battery with the electrolyte is first charged for formation.

An insulating film is attached to the formed battery, so that the positive electrode and the negative electrode of the battery are not directly contacted with each other.

Thirteenth embodiment

The lithium iron phosphate is used as the positive electrode active material to prepare a positive electrode slurry, and the positive electrode slurry is coated on a copper foil having a thickness of 5 $\mu$m to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 $\mu$m to obtain a negative electrode sheet, where the negative electrode sheet has a single-sided areal density of 99 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are arranged in an order of "positive electrode sheet-separator-negative electrode sheet", and are winded by a winding machine to form a winded core, where the separator uses "7+2+2" composite-coated separator, that is, a base film has a thickness of 7 $\mu$m and coatings at both sides of the base film are composite-coated separators having a thickness of 2 $\mu$m.

The winded core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 30 parts by weight of vinyl carbonate, 5 parts by weight of propylene carbonate, 35 parts by weight of methyl ethyl carbonate, and 30 parts by weight of dimethyl carbonate, and the viscosity of the electrolyte is 3.24 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 3.10.

The battery with the electrolyte is first charged for formation.

An insulating film is attached to the formed battery, so that the positive electrode and the negative electrode of the battery are not directly contacted with each other.

First comparative example

The lithium iron phosphate is used as the positive electrode active material to prepare a positive electrode slurry, and the positive electrode slurry is coated on a copper foil having a thickness of 5 $\mu$m to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 $\mu$m to obtain a negative electrode sheet, where the negative electrode sheet has a single-sided areal density of 99 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 $\mu$m and coatings at both sides of the base film are composite-coated separators having a thickness of 2 $\mu$m.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 60 parts by weight of vinyl carbonate, and 40 parts by weight of propylene carbonate, and the viscosity of the electrolyte is 4.0 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 2.5.

The battery with the electrolyte is first charged for formation.

An insulating film is attached to the formed battery, so that the positive electrode and the negative electrode of the battery are not directly contacted with each other.

Second comparative example

The Lithium manganese iron phosphate is used as the positive electrode active material to prepare a positive electrode slurry, and the positive electrode slurry is coated on a copper foil having a thickness of 5 $\mu$m to obtain a positive electrode sheet, where the positive electrode sheet has a single-sided areal density of 150 g/m$^2$ and a compaction density of 2.2 g/cm$^3$.

The graphite is used as the negative electrode active material to prepare a negative electrode slurry, and the negative electrode slurry is coated on an aluminum foil having a thickness of 12 $\mu$m to obtain a negative electrode sheet, where the negative electrode sheet has a single-sided areal density of 66 g/m$^2$ and a compaction density of 1.45 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 $\mu$m and coatings at both sides of the base film are composite-coated separators having a thickness of 2 $\mu$m.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 60 parts by weight of vinyl carbonate, and 40 parts by weight of propylene carbonate, and the viscosity of the electrolyte is 4.0 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 2.5.

The battery with the electrolyte is first charged for formation.

An insulating film is attached to the formed battery, so that the positive electrode and the negative electrode of the battery are not directly contacted with each other.

Third comparative example

The lithium manganese iron phosphate is used as the positive electrode active material to prepare a positive electrode slurry, and the positive electrode slurry is coated on a copper foil having a thickness of 5 $\mu$m to obtain a positive electrode sheet, where the positive electrode sheet has a single-sided areal density of 210 g/m$^2$ and a compaction density of 2.55 g/cm$^3$.

The graphite is used as the negative electrode active material to prepare a negative electrode slurry, and the negative electrode slurry is coated on an aluminum foil having a thickness of 12 $\mu$m to obtain a negative electrode sheet, where the negative electrode sheet has a single-sided areal density of 93 g/m$^2$ and a compaction density of 1.65 g/cm$^3$.

The positive electrode sheet and the negative electrode sheet are cut into electrode sheets having a certain size.

The cut positive electrode sheet, the cut negative electrode sheet, and the separator are stacked layer by layer in an order of "positive electrode sheet-separator-negative electrode sheet" to form a stacked core, where the separator uses "7+2+2" composite-coated separator, that is, a base film has a thickness of 7 $\mu$m and coatings at both sides of the base film are composite-coated separators having a thickness of 2 $\mu$m.

The stacked core is placed into a battery case, and then moisture is removed from the battery by vacuum baking.

Lithium difluorosulfonimide (LiFSI) and lithium hexafluorophosphate (LiPF6) are dissolved in a solvent to obtain an electrolyte, where the concentration of both the lithium bisfluorosulfonimide and the lithium hexafluorophosphate is 0.5 mol/L, the solvent includes 60 parts by weight of vinyl carbonate, and 40 parts by weight of propylene carbonate, and the viscosity of the electrolyte is 4.0 mPa·s.

The electrolyte is injected into the battery that has been vacuum-baked, and then the battery stands for 10 hours, so that the electrolyte sufficiently infiltrates the positive electrode sheet, the negative electrode sheet, and the separator, where the injection coefficient of the electrolyte is 2.5.

The battery with the electrolyte is first charged for formation.

An insulating film is attached to the formed battery, so that the positive electrode and the negative electrode of the battery are not directly contacted with each other.

Performance tests are performed on the batteries prepared in the first to thirteenth embodiments and the first to third comparative Examples. Test items include a test for lithium precipitation at the interface, a direct current internal resistance (DCR) test, and a cycle performance test.

A method for performing the test for the lithium precipitation at the interface is as follows: after the battery is off-line, the battery is fully charged and disassembled, and the lithium precipitation at the interface is observed and classified as no lithium precipitation, minor lithium precipitation (lithium precipitation area being less than 0.5 cm$^2$), moderate lithium precipitation (lithium precipitation area being 0.5 cm$^2$ to 1.0 cm$^2$), and severe lithium precipitation (lithium precipitation area being greater than 1 cm$^2$). The full charging conditions are that the battery is charged at a constant current of 0.33C to a cutoff voltage under a temperature condition of 25 °C (the cutoff voltage of the battery in which the positive electrode active material is lithium iron phosphate is 3.65 V and the cutoff voltage of the battery in which the positive electrode active material is lithium manganese iron phosphate is LMFP4.2 V), and then the battery is charged at a constant voltage and the cutoff current is 0.05C.

The DCR test method is as follows: the battery is fully charged under a condition of 25 °C, and then stands for 0.5 hours, the battery is fully discharged and the discharge capacity Q is recorded; after the battery is fully charged again and then stands for 0.5 hours, the battery is discharged at 0.1C for 0.5Q, and then stands for 1 hours, and the voltage at this time is recorded as $V_0$, and then discharged for 30 s at 1C. The voltage $V_1$ and the current I are recorded at the end of discharging, and then DCR= $(V_0-V_1)$/I in units of mΩ; and the full discharging condition is that the battery is discharged to 2.5 V at 1C under a condition of 25 °C.

The cycle performance test method is as follows: full charging and full discharging cycles are performed on the battery under a condition of 25 °C. and the capacity retention rate at 500 cycles, 1000 cycles and 3000 cycles are recorded.

The results for the tests are shown in Table 1:

Table 1 Performance comparison table of Batteries in Different embodiments and comparative examples

|  | Lithium precipitation at the interface | DCR/mΩ | cycle performance | | |
|---|---|---|---|---|---|
|  |  |  | Capacity retention rate at 500 cycles | Capacity retention rate at 1000 cycles | Capacity retention rate at 3000 cycles |
| First embodiment | no lithium precipitation | 0.85 | 98.76% | 94.28% | 90.89% |
| Second embodiment | no lithium precipitation | 0.90 | 97.86% | 94.01% | 89.77% |
| Third embodiment | no lithium precipitation | 0.88 | 96.79% | 93.21% | 87.98% |
| Fourth embodiment | minor lithium precipitation | 0.88 | 97.01% | 92.44% | 87.01 % |
| Fifth embodiment | minor lithium precipitation | 0.91 | 96.53% | 90.89% | 85.32% |
| Sixth embodiment | moderate lithium precipitation | 0.92 | 96.11% | 90.01% | 84.77% |
| Seventh embodiment | no lithium precipitation | 0.89 | 97.12% | 91.33% | 85.87% |
| Eighth embodiment | no lithium precipitation | 0.87 | 97.43% | 91.46% | 84.19% |

(continued)

|  | Lithium precipitation at the interface | DCR/m Ω | cycle performance | | |
|---|---|---|---|---|---|
|  |  |  | Capacity retention rate at 500 cycles | Capacity retention rate at 1000 cycles | Capacity retention rate at 3000 cycles |
| Ninth embodiment | minor lithium precipitation | 0.90 | 96.70% | 91.45% | 86.03% |
| Tenth embodiment | no lithium precipitation | 0.80 | 98.57% | 94.59% | 92.36% |
| Eleventh embodiment | no lithium precipitation | 0.87 | 97.85% | 90.81% | 82.39% |
| Twelfth embodiment | no lithium precipitation | 0.87 | 98.01% | 91.47% | 83.21% |
| Thirteenth embodiment | no lithium precipitation | 0.86 | 98.57% | 94.32% | 89.78% |
| First comparative example | severe lithium precipitation | 1.01 | 95.21% | 85.21% | 77.21 % |
| Second comparative example | severe lithium precipitation | 0.95 | 94.01% | 84.36% | 78.41% |
| Third comparative example | severe lithium precipitation | 0.97 | 94.02% | 84.71% | 77.87% |

After calculation, the compaction density of the positive electrode sheet, the viscosity of the electrolyte, and the injection coefficient of the electrolyte of the batteries in the first to thirteenth embodiments can all satisfy the formula

$$1.5 \leqslant \frac{V \times PD}{C} \leqslant 3.6$$ , but the compaction density of the positive electrode sheet, the viscosity of the electrolyte, and the injection coefficient of the electrolyte of the batteries in the first to third comparative examples cannot all satisfy the formula

$$1.5 \leqslant \frac{V \times PD}{C} \leqslant 3.6$$ .

As can be seen from Table 1, for a battery with the high compaction density system, when the compaction density of the positive electrode sheet, the viscosity of the electrolyte, and the injection coefficient of the electrolyte meet the requirements of the present disclosure, both the kinetic performance and the cycle performance are good, which is a significant improvement over the prior art.

**Claims**

1. A battery, comprising: a positive electrode sheet, a negative electrode sheet, and an electrolyte,

   wherein the battery satisfies:

   $$1.5 \leqslant \frac{V \times PD}{C} \leqslant 3.6,$$

   wherein V represents a viscosity of the electrolyte in mPa·s, PD represents a compaction density of the positive electrode sheet in g/cm$^3$, and C represents an injection coefficient of the electrolyte in g/Ah.

2. The battery of claim 1, wherein the battery satisfies:

   $$2.5 \leqslant \frac{V \times PD}{C} \leqslant 3.5.$$

3. The battery of claim 1 or 2, wherein the viscosity V of the electrolyte and the compaction density PD of the positive electrode sheet satisfy:

$$V=aPD+b,$$

wherein, $-5.0 \le a \le -4.0$, and $10 \le b \le 20$.

4. The battery of claim 3, wherein, $-4.7 \le a \le -4.3$, and $13 \le b \le 16$.

5. The battery of claim 4, wherein the viscosity V of the electrolyte and the compaction density PD of the positive electrode sheet satisfy:

$$V=-4.6PD+14.903.$$

6. The battery of any one of claims 1 to 5, wherein the viscosity V of the electrolyte satisfies:

$$2.5 \text{ mPa·s} \le V \le 4.0 \text{ mPa·s};$$

and/or

the injection coefficient C of the electrolyte satisfies:

$$2.5 \text{ g/Ah} \le C \le 4.5 \text{ g/Ah};$$

and/or
the compaction density PD of the positive electrode sheet satisfies:

$$2.2 \text{ g/cm}^3 \le PD \le 2.8 \text{ g/cm}^3.$$

7. The battery of claim 6, wherein the viscosity V of the electrolyte satisfies:

$$3.2 \text{ mPa·s} \le V \le 3.6 \text{ mPa·s};$$

and/or

the injection coefficient C of the electrolyte satisfies:

$$2.8 \text{ g/Ah} \le C \le 3.5 \text{ g/Ah};$$

and/or
the compaction density PD of the positive electrode sheet satisfies:

$$2.3 \text{ g/cm}^3 \le PD \le 2.6 \text{ g/cm}^3.$$

8. The battery of claim 6 or 7, wherein the viscosity of the electrolyte is a viscosity of the electrolyte under a condition of 25 °C; and
the compaction density of the positive electrode sheet is a compaction density of the positive electrode sheet in a fully discharged state.

9. The battery of any one of claims 1 to 8, wherein the electrolyte comprises a lithium salt and a solvent; and
the solvent comprises at least one of dimethyl carbonate, ethylene carbonate, propylene carbonate, ethyl methyl carbonate, ethyl acetate, or fluoroethylene carbonate.

10. The battery of claim 9, wherein the solvent comprises dimethyl carbonate, and a mass percentage of the dimethyl carbonate in the solvent is less than or equal to 50%.

11. The battery of claim 10, wherein the mass percentage of the dimethyl carbonate in the solvent is less than or equal to 30%.

12. The battery of any one of claims 1 to 11, wherein the positive electrode sheet has a single-sided areal density of 150 g/m$^2$ to 300 g/m$^2$.

13. The battery of any one of claims 1 to 12, wherein a positive electrode active material in the positive electrode sheet comprises one of lithium iron phosphate and lithium manganese iron phosphate.

14. The battery of any one of claims 1 to 13, wherein a negative electrode active material in the negative electrode sheet comprises graphite; and/or

   the negative electrode sheet has a single-sided areal density of 80 g/m$^2$ to 120 g/m$^2$; and/or
   the negative electrode sheet has a compaction density of 1.45 g/cm$^3$ to 1.70 g/cm$^3$.

15. The battery of any one of claims 1 to 14, wherein a ratio of a negative electrode capacity to a positive electrode capacity of the battery is in a range of 1.05 to 1.25.

16. The battery of claim 15, wherein the ratio of the negative electrode capacity to the positive electrode capacity of the battery is in a range of 1.10 to 1.15.

17. The battery of any one of claims 1 to 16, wherein the battery has an energy density of 150 Wh/kg to 250 Wh/kg.

18. A battery pack, comprising: the battery of any one of claims 1 to 17.

19. An electric device, comprising: the battery of any one of claims 1 to 17 and/or the battery pack of claim 18.

## INTERNATIONAL SEARCH REPORT

| International application No. |
| --- |
| **PCT/CN2024/143144** |

| A. | CLASSIFICATION OF SUBJECT MATTER |
| --- | --- |

H01M 10/052(2010.01)i;  H01M 10/056(2010.01)i;  H01M 4/13(2010.01)i

According to International Patent Classification (IPC) or to both national classification and IPC

| B. | FIELDS SEARCHED |
| --- | --- |

Minimum documentation searched (classification system followed by classification symbols)

IPC： H01M 10, H01M 4

Documentation searched other than minimum documentation to the extent that such documents are included in the fields searched

Electronic data base consulted during the international search (name of data base and, where practicable, search terms used)

ENTXTC, CNTXT, CNKI, VEN: 电池, 正极, 电解液, 粘度, 压实, 密度, 注液, 系数, 能量, battery, positive, electrode, electrolyte, viscosity, compact+, density, liquid d inject+, coefficient, energy

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115548445 A (SUNWODA ELECTRIC VEHICLE BATTERY CO., LTD.) 30 December 2022 (2022-12-30)<br>description, paragraph 0061, and embodiments 1-19 | 1-19 |
| A | CN 116936931 A (SUNWODA MOBILITY ENERGY TECHNOLOGY CO., LTD.) 24 October 2023 (2023-10-24)<br>claims 1-10 | 1-19 |
| A | CN 118352604 A (HEFEI GUOXUAN HIGH-TECH POWER ENERGY CO., LTD.) 16 July 2024 (2024-07-16)<br>claims 1-10 | 1-19 |
| A | CN 118431577 A (HUIZHOU HIGHPOWER TECHNOLOGY CO., LTD.) 02 August 2024 (2024-08-02)<br>description, paragraphs 0005-0066 | 1-19 |
| A | CN 118448705 A (PHYLION BATTERY CO., LTD.) 06 August 2024 (2024-08-06)<br>claims 1-10 | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 July 2025** | **29 July 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/143144**

| Patent document cited in search report | | | Publication date (day/month/year) | Patent family member(s) | | | Publication date (day/month/year) |
|---|---|---|---|---|---|---|---|
| CN | 115548445 | A | 30 December 2022 | CN | 115548445 | B | 06 June 2023 |
| | | | | WO | 2024077765 | A1 | 18 April 2024 |
| | | | | EP | 4394990 | A1 | 03 July 2024 |
| | | | | US | 2025132391 | A1 | 24 April 2025 |
| | | | | JP | 2024538462 | W | 22 October 2024 |
| CN | 116936931 | A | 24 October 2023 | WO | 2025001007 | A1 | 02 January 2025 |
| CN | 118352604 | A | 16 July 2024 | None | | | |
| CN | 118431577 | A | 02 August 2024 | None | | | |
| CN | 118448705 | A | 06 August 2024 | None | | | |

Form PCT/ISA/210 (patent family annex) (July 2022)

**REFERENCES CITED IN THE DESCRIPTION**

**Patent documents cited in the description**

- CN 202411748649